# EUROPEAN PATENT SPECIFICATION

(11) **EP 3 521 600 B1**
(45) Date of publication and mention of the grant of the patent: **15.03.2023**
(21) Application number: 17855369.9
(22) Date of filing: 18.07.2017
(51) Int. Cl.: F02D 45/00, F02D 21/08, F02D 43/00, F02M 26/06, F02P 5/15, F02P 5/153, F02D 35/02, F02D 41/00, F02D 41/14, F02P 5/04, F02P 5/152

(54) **INTERNAL COMBUSTION ENGINE CONTROL DEVICE**
VERBRENNUNGSMOTORSTEUERUNGSVORRICHTUNG
DISPOSITIF DE COMMANDE DE MOTEUR À COMBUSTION INTERNE

(30) Priority: 30.09.2016 JP 2016192524
(43) Date of publication of application: 07.08.2019
(73) Proprietor: Hitachi Astemo, Ltd., Hitachinaka-shi, Ibaraki 312-8503 (JP)
(72) Inventor: ORYOJI, Kazuhiro, Tokyo 100-8280 (JP); AKAGI, Yoshihiko, Hitachinaka-shi Ibaraki 312-8503 (JP)
(74) Representative: MERH-IP Matias Erny Reichl Hoffmann Patentanwälte PartG mbB
(86) International application number: PCT/JP2017/025848
(87) International publication number: WO 2018/061411

(56) References cited:
- EP-A2- 0 222 486
- JP-A- 2006 291 795
- JP-A- 2007 262 937
- JP-A- 2014 125 980
- JP-A- 2014 141 943
- JP-A- 2014 190 305
- US-A- 5 287 836
- US-A1- 2004 084 020
- US-A1- 2013 255 628

## Description

### Technical Field

The present invention relates to an engine control device, and more particularly to a technology of controlling an engine including a system that returns exhaust gas discharged from an engine to an intake side.

### Background Art

In order to reduce the fuel consumption of automobiles, engines incorporating a mechanism (Exhaust Gas Recirculation (EGR)) for returning exhaust gas to the intake side have been put on the market. The exhaust gas is recirculated for the purpose of reducing an intake pipe negative pressure (difference between the in-cylinder pressure during an intake stroke and an atmospheric pressure) under the condition of a small engine output so as to reduce the work (pumping loss) that the piston performs outside the system, and for the purpose of suppressing abnormal combustion (knock) under the condition of a relatively large engine output so as to reduce exhaust loss.

From the viewpoint of suppressing the knock and reducing the exhaust loss under the condition of the large engine output, it is desirable to return as much EGR gas amount as possible within a range of maintaining the combustion stability. An internal combustion engine control device described in PTL 1 uses a technique related to the EGR control in the knock region. The internal combustion engine control device in the PTL 1 discloses control that, in a case where there is a difference between a knock limit ignition timing and a target ignition timing on a map, increases the amount of EGR gas in accordance with the difference between the knock limit ignition timing and the target ignition timing to achieve the target ignition timing, thereby maximizing the EGR amount in accordance with operating conditions. Furthermore, PTL 2 discloses a method to determine and to combine multiple MBT timing criteria to increase the reliability and robustness of MBT timing estimation based upon spark plug ionization signal waveforms. Eventually, PTL 3 discloses a combustion control in an internal combustion engine to balance fuel among combustion chambers in response to the ratio of combustion chamber pressure to motored pressure as a function of crankshaft rotational angle.

### Citation List

### Patent Literatures

PTL 1: JP 2006-291795 A
PTL 2: US 2004 084 020 A1
PTL 3: EP 0 222 486 A2

### Summary of Invention

### Technical Problem

The technique described in PTL 1 discloses the control of increasing the amount of EGR gas in accordance with a difference, if any, between the target ignition timing and the knock limit ignition timing. In addition, it discloses a technique of not performing EGR control and ignition control when deterioration of combustion has been detected. However, since these control techniques do not take the range of the knock limit and the combustion stability limit into consideration for control, causing degradation in robustness in the operating state, leading to a possibility of deterioration of combustion stability or occurrence of knock even by a small disturbance. For this reason, a technology of controlling the EGR amount while ensuring a survival region as an engine operating condition is necessary.

### Solution to Problem

In order to solve the above problem, an internal combustion engine control device having the features of independent claim 1 is provided. Preferred embodiments are described in the dependent claims. In particular, the internal combustion engine control device controls an internal combustion engine equipped with an exhaust recirculation passage that allows intake of an exhaust gas of the internal combustion engine again by the internal combustion engine, in which the internal combustion engine includes: a combustion instability calculation unit that calculates combustion instability of the internal combustion engine on the basis of a rotation speed of the internal combustion engine or an in-cylinder pressure of the internal combustion engine; and a control unit that controls to bring an exhaust recirculation amount together with an ignition advance amount in increasing directions when a difference between an advance limit ignition timing and an ignition timing at which combustion instability has been detected is a predetermined value or more.

### Advantageous Effects of Invention

According to the present invention, it is possible to control the EGR amount in a region having a wide range between an advance limit ignition timing defined by knock or optimal ignition timing and ignition timing at which combustion instability is detected, making it possible to maximize the EGR amount without deteriorating robustness against disturbance.

### Brief Description of Drawings

[FIG. 1] FIG. 1 is a system block diagram illustrating a configuration of an engine control device according to a first embodiment of the present invention and an example useful to understand the invention.
[FIG. 2] FIG. 2 is a diagram illustrating a relationship between an EGR rate, and a knock limit ignition timing and stability limit, in a high load region.
[FIG. 3] FIG. 3 is a system configuration diagram of an engine control device according to the first embodiment of the present invention and the example useful to understand the invention.
[FIG. 4] FIG. 4 is a flowchart illustrating control of the EGR amount and the ignition timing according to the range of the knock limit ignition timing and the combustion instability ignition timing of the engine control device according to the first embodiment of the present invention.
[FIG. 5] FIG. 5 illustrates changes in an ignition timing and the EGR rate in use of the engine control device according to the first embodiment of the present invention.
[FIG. 6] FIG. 6 illustrates changes in various actuators and measured values in use of the engine control device according to the first embodiment of the present invention.
[FIG. 7] FIG. 7 is a diagram illustrating a relationship between an EGR rate and a fuel efficiency optimized ignition timing and a stability limit, in a low load region.
[FIG. 8] FIG. 8 is a flowchart illustrating control of the EGR amount and the ignition timing according to the range of the fuel efficiency optimized ignition timing and the combustion instability ignition timing of an engine control device according to the example useful to understand the invention.
[FIG. 9] FIG. 9 illustrates changes in ignition timing and EGR rate in use of the engine control device according to the example useful to understand the invention.
[FIG. 10] FIG. 10 illustrates changes in various actuators and measured values in use of the engine control device according to the example useful to understand the invention.

### Description of Embodiments

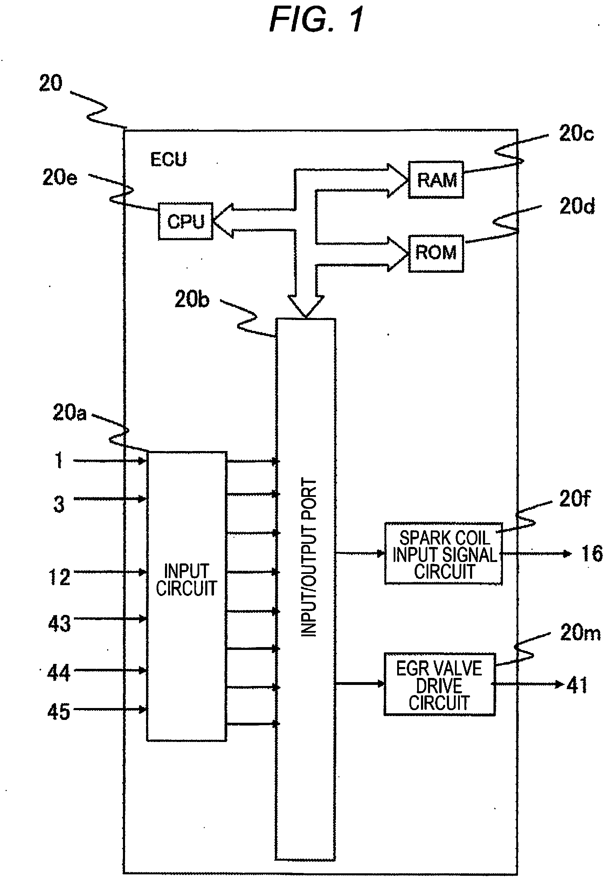

Embodiments of the present invention will be described below with reference to the accompanying drawings. First, a configuration common to the embodiments described below will be described with reference to FIGS. 1, 2, and 3.

FIG. 1 is a system block diagram illustrating a configuration of an engine control device according to anembodiment of the present invention. Output signals from an airflow sensor 1, a humidity sensor 3, an accelerator opening degree sensor 12, a differential pressure sensor 43, an EGR temperature sensor 44, and a coolant temperature sensor 8 are input to an input circuit 20a of an ECU 20. Input signals, however, are not limited to these. An input signal of each of the sensors is sent to an input port of an input/output port 20b. Values sent to the input port 20b are stored in a RAM 20c and undergoes arithmetic processing by a CPU 20e. A control program describing details of the arithmetic processing is preliminarily written in a ROM 20d.

The value indicating the operation amount of each of actuators calculated according to the control program is stored in the RAM 20c, thereafter sent to the output port in the input/output port 20b, and then, sent to each of actuators via each of drive circuits. In the present embodiment, the drive circuit includes an electronic throttle drive circuit 20f and an EGR valve drive circuit 20m. Each of the circuits controls an electronically controlled throttle 2 and an EGR valve 41, respectively. While the present embodiment is a case where the ECU 20 includes the drive circuits, the present invention is not limited to this and any of the drive circuits described above may be included in the ECU 20.

The ECU 20 estimates the EGR rate on the basis of an input signal and controls an ignition coil 16 and the EGR valve 41 in accordance with required operating conditions.

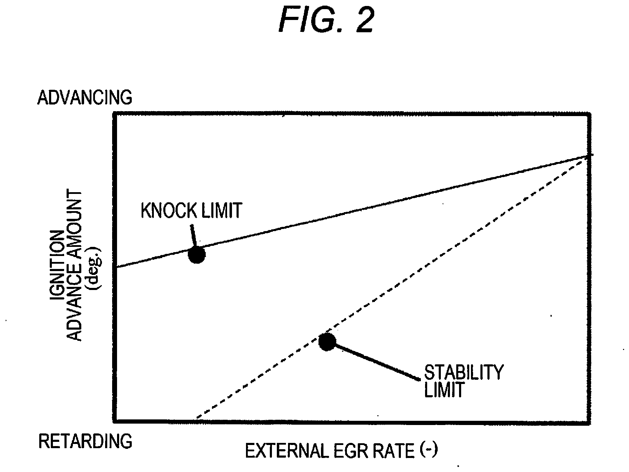

FIG. 2 is a diagram illustrating a stable operation range of the engine. In high load regions, an advance amount of the ignition timing is limited by the knock limit, and the retardation amount is limited by the stability limit. Together with an increase in the external EGR rate, an ignition timing settable range between the knock limit and the stability limit decreases. Highest efficiency of the internal combustion engine is obtained at a point where the external EGR rate is at its maximum value among the ignition timing settable ranges. However, a slight deviation of the EGR rate and the ignition timing might exceed the stability limit or the knock limit, leading to degradation of the robustness against disturbance. For this reason, it is important to control the external EGR rate while ensuring the ignition timing settable range.

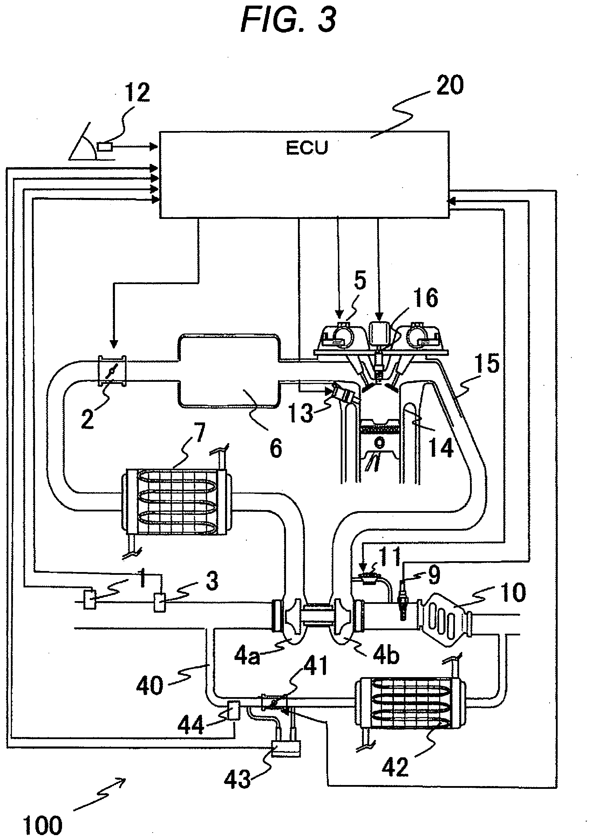

FIG. 3 is a configuration diagram of a direct injection type gasoline engine for an automobile having a low-pressure EGR passage.

An engine 100 is an automobile gasoline engine that performs spark ignition combustion. There are the airflow sensor 1 for measuring an intake air amount, the humidity sensor 3 for detecting intake humidity, a compressor 4a of a supercharger for supercharging intake air, an intercooler 7 for cooling intake air, and the electronically controlled throttle 2 for adjusting intake pipe pressure, at appropriate positions of each of the intake pipes. Here, the humidity sensor 3 is a sensor capable of detecting relative humidity and absolute humidity. The engine 100 further includes a fuel injection device (hereinafter referred to as an injector) 13 for injecting fuel into a cylinder 14 of each of cylinders, and an ignition plug 16 for supplying ignition energy for each of the cylinders. A variable valve 5 for adjusting gas flowing into or out of the cylinder is provided in a cylinder head. By adjusting the variable valve 5, the intake air amount and an internal EGR amount of all the cylinders are adjusted. Although not illustrated, a high-pressure fuel pump for supplying high-pressure fuel to the fuel injection device 13 is connected to the fuel injection device 13 by fuel piping. A fuel pressure sensor for measuring fuel injection pressure is provided within the fuel piping.

Furthermore, there are a turbine 4b for applying rotational force to the compressor 4a of the supercharger by exhaust energy, an electronically controlled wastegate valve 11 for adjusting exhaust flow rate flowing to the turbine, a three-way catalyst 10 for purifying the exhaust, and an air-fuel ratio sensor 9 as a mode of an air-fuel ratio detector and that detects the air/fuel ratio of the exhaust gas at the upstream side of the three-way catalyst 10, provided at appropriate positions of each of exhaust pipes 15.

Further included is an EGR pipe 40 for returning the exhaust gas from the downstream side of the catalyst 10 of the exhaust pipe to the upstream side of the compressor 4a of the intake pipe. Furthermore, there are an EGR cooler 42 for cooling the EGR, the EGR valve (EGR mechanism) 41 for controlling the EGR flow rate, the differential pressure sensor 43 for detecting the differential pressure across the EGR valve, the EGR temperature sensor 44 for detecting the EGR temperature, attached to appropriate positions of each of the EGR pipes 40. Although not illustrated, there is provided a temperature sensor 45 for measuring the temperature of coolant circulating the engine.

Signals obtained from the airflow sensor 1, the humidity sensor 3, the air-fuel ratio sensor 9, the differential pressure sensor 43, and the EGR temperature sensor 44 are sent to the engine control unit (ECU) 20. Furthermore, a signal obtained from the accelerator opening degree sensor 12 is sent to the ECU 20. The accelerator opening degree sensor 12 detects the depression amount of the accelerator pedal, that is, the accelerator opening degree. The ECU 20 calculates the demanded torque on the basis of the output signal of the accelerator opening degree sensor 12. That is, the accelerator opening degree sensor 12 is used as a demanded torque detection sensor for detecting the demanded torque to the engine. The ECU 20 calculates the rotation speed of the engine on the basis of an output signal from a crank angle sensor. The ECU 20 optimally calculates the main operation amount of the engine such as the air flow rate, the fuel injection amount, the ignition timing, the fuel pressure, etc. on the basis of the operation state of the engine obtained from the outputs of the various sensors.

The fuel injection amount calculated by the ECU 20 is converted into a valve open pulse signal and sent to the injector 13. Furthermore, an ignition signal is sent to the ignition plug 16 so as to be ignited at an ignition timing calculated by the ECU 20. The throttle opening degree calculated by the ECU 20 is sent to the electronically controlled throttle 2 as a throttle drive signal. The EGR valve opening degree calculated by the ECU 20 is sent to the EGR valve 41 as the EGR valve opening degree drive signal.

Fuel is injected into the air flowing into the cylinder 14 from the intake pipe via the intake valve so as to form an air-fuel mixture. The air-fuel mixture is exploded by a spark generated from the ignition plug 16 at a predetermined ignition timing, and presses down the piston by the combustion pressure to generate the driving force of the engine. Furthermore, the exhaust gas after the explosion is sent to the three-way catalyst 10 via the exhaust pipe 15. Exhaust components are purified inside the three-way catalyst 10 to be discharged to the outside. Having the three-way catalyst 10 on the upstream side of the inlet of the EGR pipe 40, it is possible to stabilize the composition of the exhaust gas to be recirculated, leading to stable acquisition of performance in the EGR amount control under arbitrary operating conditions.

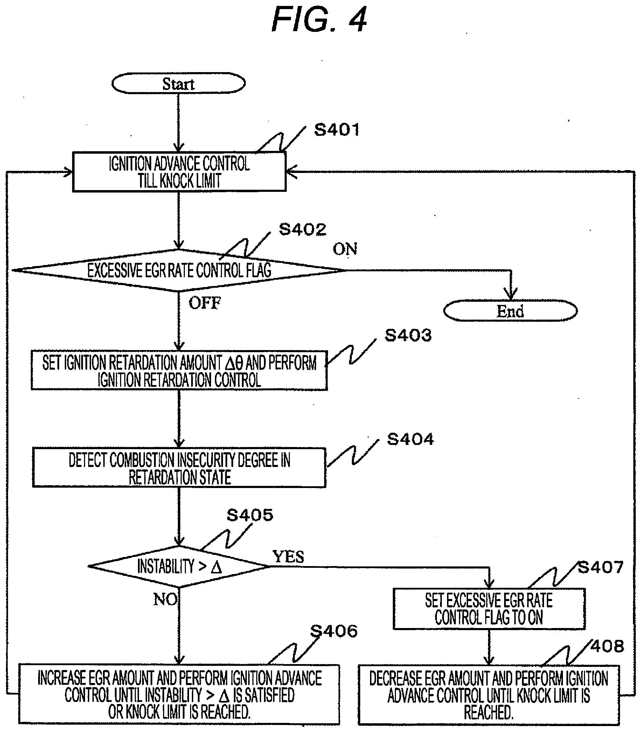

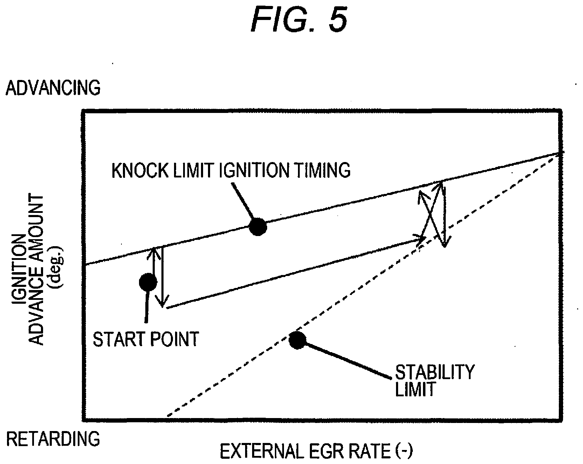

FIG. 4 illustrates arithmetic processing performed by the CPU 20e (control unit) of the ECU 20 in FIG. 1. The ECU 20 according to the present exemplary embodiment controls an internal combustion engine (engine 100) including an exhaust recirculation passage used for intake of the exhaust gas of the internal combustion engine (engine 100) to the internal combustion engine 100 again. First, in step S401, ignition advance control is performed to advance the ignition timing of the ignition plug 16 to the knock limit. In the present exemplary embodiment, as illustrated in FIG. 5, a region in which the external EGR rate is smaller than the set value and the ignition advance amount is larger than the set value is set as a knock occurrence region, and the region other than this region is set as a knock non-occurrence region. Accordingly, the knock limit ignition timing is set to be outside the knock occurrence region by setting the ignition advance amount to the set value or less. Next, the processing proceeds to step S402 to check whether the excessive EGR rate control flag is ON or OFF. Here, when the excessive EGR rate control flag is ON, this means that the EGR rate is too high, and thus, the present control is finished.

In a case where determination is OFF in step S402, the processing proceeds to step S403 to execute ignition retardation control for retarding the ignition timing of the ignition plug 16. Next, the processing proceeds to step S404 to detect combustion instability at the time of ignition retardation. In the present exemplary embodiment, as illustrated in FIG. 5, a region in which the external EGR rate is smaller than the set value and the ignition advance amount is smaller than the set value is set as a combustion unstable region, and the region other than this region is set as a combustion stable region. Accordingly, the stability limit is set to be outside the combustion unstable region by setting the ignition advance amount to the set value or more.

Next, in step S405, when the combustion instability is less than the set value, it is judged that there is room to increase the EGR amount, and the processing proceeds to step S406 to execute the ignition timing advance control together with the increase in the EGR amount. In judgment of the combustion instability, comparison of the ignition timing of the ignition plug 16 is made between the retardation amount and the set value. When the retardation amount is within the set value, it is judged that the combustion instability is low, that is, combustion is stable. The set value is set on the basis of the difference between the ignition advance amount of the knock limit ignition timing and the ignition advance amount of the stability limit, at the corresponding external EGR rate.

Alternatively, the set value is obtained from the difference between the amount at the retarded ignition timing of the ignition plug 16 and the ignition advance amount of the corresponding stability limit.

Still alternatively, the combustion instability calculation unit of the CPU 20e (control unit) of the ECU 20 may obtain the combustion instability of the internal combustion engine 100 on the basis of the rotation speed of the engine 100 or the in-cylinder pressure of the internal combustion engine 100. Here the control is continued until combustion instability or knock limit is reached.

In a case where it is judged in step S405 that the combustion instability is greater than the set value, the processing proceeds to step S407, in which the excessive EGR rate control flag is set to ON. The processing proceeds to step S408 to execute reduction of the EGR amount and ignition advance control. With the execution of the processing of steps S403 to S408, it is possible to implement EGR amount increase control in a case where the range formed by the knock limit and the combustion stability limit is an appropriate range or more. With this processing, the EGR amount can be optimally controlled without falling into a narrow setting range. Furthermore, by executing the ignition advance control together with reduction of the EGR amount in step S406, it is possible to control in the combustion stabilizing direction using the quicker response ignition advance control, making it possible to transition from the combustion unstable condition quickly to the stable condition.

As described above, the internal combustion engine control device (ECU 20) of the present exemplary embodiment includes the control unit (CPU 20e) that controls to bring the exhaust recirculation amount together with the ignition advance amount in increasing directions when the difference between the advance limit ignition timing and the ignition timing at which the combustion instability has been detected is a set value or more.

It is also desirable that the ignition advance limit is the knock limit ignition timing. Additionally, it is desirable that the ignition advance limit is the fuel efficiency optimized ignition timing. Furthermore, it is desirable that the combustion instability calculation unit estimates the combustion stability from the variation amount of the in-cylinder pressure maximized position, detected on the basis of the in-cylinder pressure sensor.

Furthermore, it is desirable that a device that detects the combustion stability is an in-cylinder pressure sensor and that the combustion instability calculation unit estimates the combustion stability from the variation amount of the engine output, estimated on the basis of the in-cylinder pressure sensor. Furthermore, it is desirable that after setting the ignition timing at which the combustion instability has been detected, the control unit (CPU 20e) changes the ignition timing to an advance limit ignition timing, and thereafter the control unit desirably brings the exhaust recirculation amount together with the ignition advance amount in increasing directions.

Furthermore, when controlling the exhaust recirculation dormitory together with the ignition advance amount in the directions to be increased, it is desirable that the control unit (CPU 20e) controls the ignition advance amount so that a combustion center position detected by the in-cylinder pressure falls within a setting range.

FIG. 5 illustrates the transition of the state when the control flow illustrated in FIG. 4 is executed. Starting from a start point and the knock limit ignition timing is reached after the ignition advance, the ignition timing is retarded temporarily. Since the combustion stability here falls within a predetermined value, an increase in the EGR rate and ignition timing advance control are implemented. When combustion instability is detected during the control, control of the EGR valve is stopped and ignition advance control is executed. Next, in a case where a knock limit is detected, ignition retardation is executed for a predetermined amount to detect combustion instability.

In the example of FIG. 5, since the ignition retardation after the increase in the EGR rate works to reach the unstable region beyond the stability limit, reduction of the EGR rate and ignition advance are performed. In this manner, by controlling the EGR amount using the settable range of the knock limit ignition timing and the combustion stability ignition timing as a parameter, it is possible to perform control while maximizing the reduction of fuel consumption and ensuring robustness against disturbance.

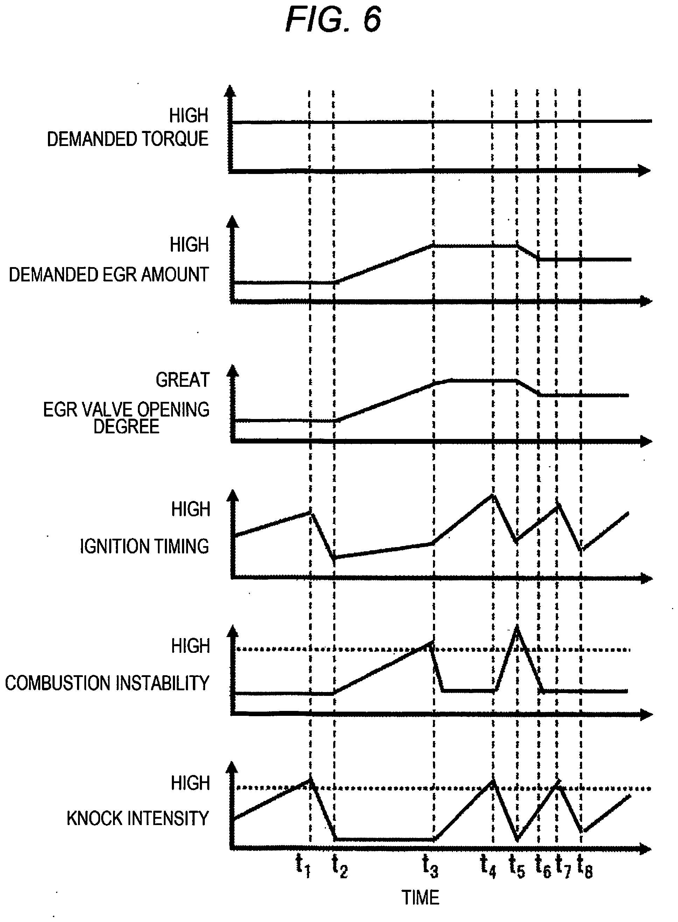

FIG. 6 illustrates a state transition when the control flow illustrated in FIG. 4 is executed. The horizontal axis of FIG. 5 represents time here. A knock is detected at time t1, and the ignition retardation is immediately executed at time t2, whereby the knock intensity is lowered. Since the combustion instability here is a predetermined value or less, the demanded EGR amount after the time t2 increases temporally. Also, the demanded ignition timing is also advanced in accordance with this increase.

Since the combustion instability exceeds a predetermined value at time t3, the ignition advance and the demanded EGR amount are set to constant values. At t4, after the occurrence of the knock, the ignition timing is retarded immediately at time t5. In the present exemplary embodiment, since the combustion instability at time t5 exceeds a predetermined range, reduction of demanded EGR amount and advance of ignition timing are performed on and after time t6. Since the knock intensity exceeds a predetermined range at time t7, the ignition timing is retarded and the combustion instability is detected at time t8.

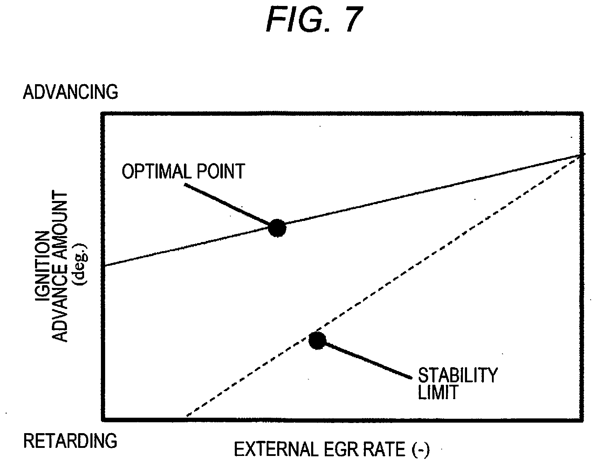

Next, an example useful to understand the invention will be described with reference to FIGS. 7 to 10.

FIG. 7 is a diagram illustrating an operating range of an engine in a low load region. In the low load region, the ignition timing advance amount is limited by the optimal ignition timing from the viewpoint of fuel economy deterioration, while the retardation amount is limited by the stability limit. Together with an increase in the external EGR rate, the ignition timing settable range between the fuel efficiency optimized ignition timing and the stability limit decreases. Highest efficiency of the internal combustion engine is obtained at a point where the external EGR rate is at its maximum value among the ignition timing settable ranges. However, a slight deviation of the EGR rate and the ignition timing might exceed the stability limit or the fuel efficiency optimized ignition timing, leading to degradation of the robustness against disturbance. For this reason, it is important to control the external EGR rate while ensuring the ignition timing settable range.

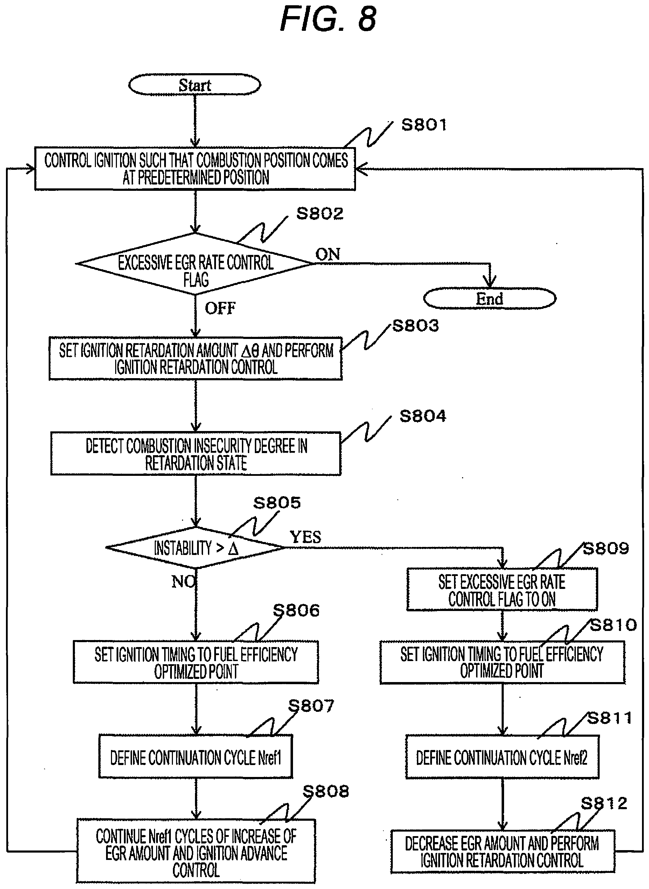

FIG. 8 illustrates arithmetic processing performed by the ECU of FIG. 1. First, step S801 performs ignition advance control so that a combustion center position comes to a predetermined position. The combustion center position is determined whether it is at a predetermined position on the basis of a pressure analysis result obtained by detection using an in-cylinder pressure sensor (not illustrated in FIG. 3). Note that the combustion position here can be represented by a crank angle at which the pressure is a maximum value or a crank angle at which the heat generation rate reaches 50%. Next, the processing proceeds to step S802, and the state of the excessive EGR rate control flag is confirmed. In a case where determination is OFF in step S802, the processing proceeds to step S803 to set the ignition retardation amount and perform ignition retardation control. Here, the ignition retardation amount is decided in view of a demanded value of the fuel economy deterioration and an existence allowable region, which can be set to approximately 1 to 2 deg. CA.

Then, the processing proceeds to step S804 to detect the combustion instability at the time of ignition retardation is performed. Next, in step S805, when the combustion instability is less than a predetermined value, it is judged that there is room to increase the EGR amount, and the processing proceeds to step S806. In step S806, the ignition timing is set equal to the ignition timing set in step S801. Next, the processing proceeds to step S807 to define a continuation cycle Nref1 of increasing in the EGR amount and the ignition advance control to be executed in step S808.

In a case where it is judged that it is near the upper limit of EGR rate, from the past circumstances, the value of Nref1 can be set to be small. Subsequently, the processing proceeds to step 808 to execute increase in the EGR amount and an ignition advance control.

Here, the target value of the EGR amount can be set so that the change in the EGR amount per unit time becomes constant. First, the advance control of the ignition timing is performed so that the combustion center position becomes a predetermined position together with the increase in the EGR amount. After the Nref1 cycle step S808 is continued, the processing proceeds to step S801. In a case where the instability is greater than a predetermined value in step S805, the processing proceeds to step 5809 to set the excessive EGR rate control flag to ON, and then the processing proceeds to step S810. In step S810, the ignition timing fuel efficiency optimized point is set, and then the processing proceeds to step S811.

In step S811, the number of cycles for continuing step S812 is defined. Next, the routine proceeds to step S812, in which the EGR reduction and the ignition advance control are executed. The target value can be set so that the change in the EGR rate per unit time is constant in the reduction of EGR. Processing of steps S803 to S808 makes it possible to increase the EGR amount while suppressing deterioration of fuel efficiency due to deviation of a combustion phase during the EGR increase control.

Moreover, with the execution of the processing of steps S803 to S812, it is possible to implement EGR amount increase control in a case where the range formed by the fuel efficiency optimized ignition timing and the combustion stability limit is an appropriate range or more. With this processing, the EGR amount can be optimally controlled without falling into a narrow setting range. In addition, by setting the ignition timing to the fuel efficiency optimized point at the EGR rate using the highly responsive ignition timing in step S806 or step S810, it is possible to suppress deterioration in fuel efficiency during the EGR increase/decrease control.

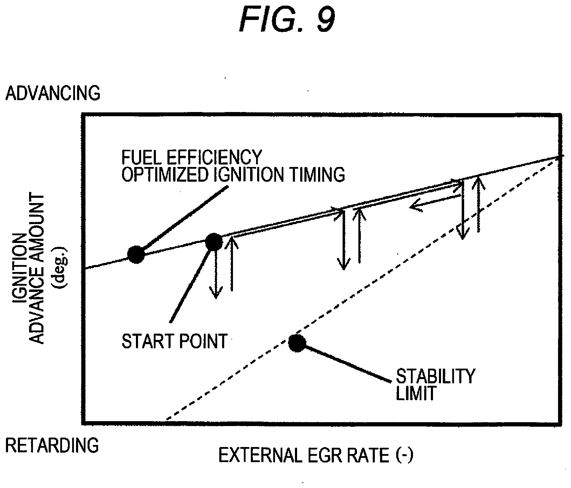

FIG. 9 illustrates the transition of states when the control flow illustrated in FIG. 8 is executed. Starting from the start point and retardation of the ignition timing is temporarily performed after ignition retardation. Since the combustion stability here falls within a predetermined value, an increase in the EGR rate and ignition timing advance control are implemented. At this time, the ignition timing is temporarily advanced and controlled to the fuel efficiency optimized ignition timing at the EGR rate. Next, both the EGR rate and the ignition timing are increased. Here, the combustion position is detected by using the in-cylinder pressure value detected by using the in-cylinder pressure sensor (not illustrated in FIG. 3), and the ignition timing is evolved so that the combustion position is set to a predetermined value. When the increase of the EGR rate and the ignition advance are continued for a predetermined period, the ignition retardation control is temporarily executed to confirm the combustion stability. Since the combustion stability at the time of ignition retardation is within a predetermined range, ignition advance is performed to set the combustion position to a predetermined position, and thereafter, increase of the EGR rate and the ignition advance are performed.

Again, the increase of the EGR rate and the ignition advance are performed for a predetermined period, and thereafter, ignition retardation control is executed. At this time, the combustion instability at the time of ignition retardation exceeds a predetermined range. Accordingly, the combustion center position by the ignition advance is set to a predetermined position and then the reduction control of the EGR rate is executed. According to the example useful to understand the invention, by controlling the EGR amount by using the settable range of the fuel efficiency optimized ignition timing and the ignition timing of combustion stability as a parameter, it is possible to perform control while maximizing the reduction of fuel consumption and ensuring robustness against disturbance.

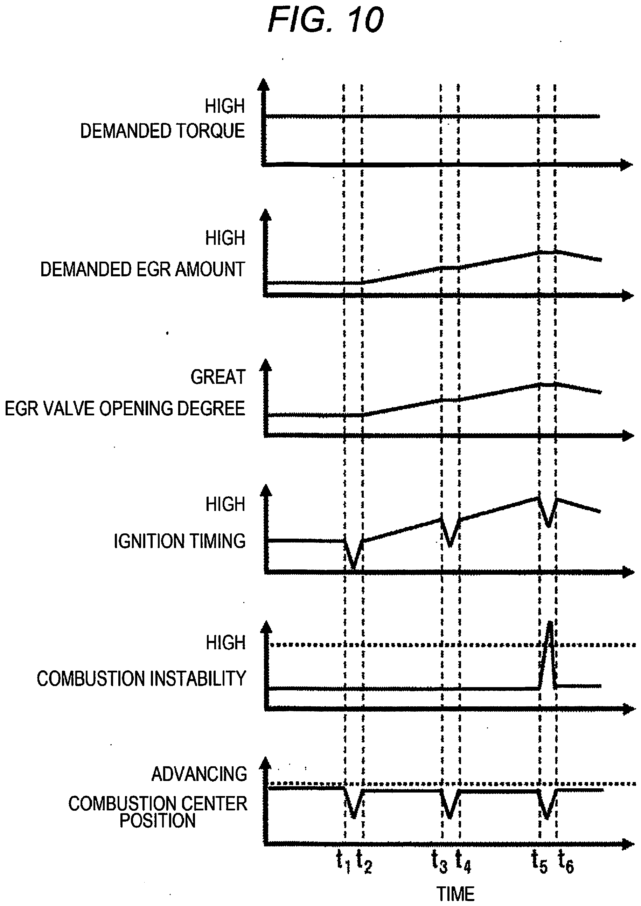

FIG. 10 illustrates a state transition at the time when the control flow illustrated in FIG. 7 is executed. The horizontal axis of FIG. 5 represents time here. Ignition retardation control is performed at time t1 to detect combustion instability. Since detected t is within a predetermined range, ignition advance control is executed at time t2 to realize a predetermined combustion center position. Thereafter, the EGR rate is increased and the ignition advance is performed until time t3, so as to increase the EGR amount while maintaining the combustion center position. Ignition retardation control is performed again at time t3 after a predetermined time elapsed so as to confirm the combustion instability. Since the combustion instability is within the predetermined range here again, the ignition timing is advanced again, the combustion center position is set at a predetermined position. Thereafter, the increase of the EGR amount and the ignition advance are simultaneously performed. In this case, control is also performed so that the combustion center position is maintained substantially constant. After execution of the scheduled cycle control again, ignition retardation control is executed to detect combustion instability. Since the combustion instability exceeds a predetermined range, the ignition advance control is temporarily executed. Thereafter, it is judged that there is no sufficient settable range, and EGR reduction and ignition retardation are executed.

As described above, in a case where the combustion stability limit of the internal combustion engine (engine 100) has not been reached in a state where the ignition timing is retarded after the ignition timing of the ignition plug 16 that performs ignition of the internal combustion engine (engine 100) is advanced, the control unit (CPU 20e) of the internal combustion engine control device (ECU 20) controls to advance the ignition timing again and increase the exhaust recirculation amount. Furthermore, in a case where the combustion stability limit of the internal combustion engine (engine 100) has not been reached in a state where the ignition timing is retarded after the ignition timing is advanced to the set ignition advance limit, the control unit (CPU 20e) desirably controls to advance the ignition timing again and increase the exhaust recirculation amount. Furthermore, in a case where the combustion stability limit of the internal combustion engine has not been reached in a state where the ignition timing is retarded after the ignition timing is advanced to the set knock limit, the control unit (CPU 20e) desirably controls to advance the ignition timing again and increase the exhaust recirculation amount.

Furthermore, it is desirable that the control unit (CPU 20e) controls so as to maintain a constant value of the exhaust recirculation amount when advancing the ignition timing at the beginning. Furthermore, in a case where the combustion stability limit of the internal combustion engine (engine 100) has been reached in a state where the ignition timing is retarded after the ignition timing is advanced to the set ignition advance limit, the control unit (CPU 20e) desirably controls to advance the ignition timing again and decrease the exhaust recirculation amount.

### Reference Signs List

- 1: airflow sensor
- 2: electronically controlled throttle
- 3: humidity sensor
- 4: supercharger
- 4a: compressor
- 4b: turbine
- 5: variable valve
- 6: intake manifold
- 7: intercooler
- 8: coolant temperature sensor (not illustrated)
- 9: air-fuel ratio sensor
- 10: three-way catalyst
- 11: wastegate valve
- 12: accelerator opening degree sensor
- 13: injector for in-cylinder direct injection
- 14: cylinder
- 15: exhaust pipe
- 16: ignition plug
- 20: ECU
- 20a: input circuit
- 20b: input/output port
- 20c: RAM
- 20d: ROM
- 20e: CPU
- 20f: electronically controlled throttle drive circuit
- 20g: injector drive circuit
- 20h: wastegate valve drive circuit
- 20j: intercooler coolant valve drive circuit
- 20k: transmission drive circuit
- 20m: EGR valve drive circuit
- 30: transmission
- 40: EGR pipe
- 41: EGR valve
- 42: EGR cooler
- 43: differential pressure sensor
- 44: EGR temperature sensor
- 100: engine

## Claims

1. An internal combustion engine control device (21) controlling an internal combustion engine (100) equipped with an exhaust recirculation passage allowing intake of an exhaust gas of the internal combustion engine (100) to the internal combustion engine (100),
the internal combustion engine control device (21) comprising
a control unit (20e) configured to advance an ignition timing of an ignition plug (16) performing ignition of the internal combustion engine (100) again and to increase an exhaust recirculation amount in a case where a combustion stability limit of the internal combustion engine (100) has not been reached in a state where the ignition timing is retarded after the ignition timing of the ignition plug (16) is advanced, wherein the ignition timing is retarded after the ignition timing is advanced to a set knock limit, wherein, in a case where a combustion instability is detected, the control unit (20e) is configured to stop increasing the exhaust recirculation amount, wherein,
in a case where the set knock limit is detected, the ignition timing is retarded for a set amount to detect the combustion instability, and in a case where the combustion stability limit of the internal combustion engine (100) has been reached in a state where the ignition timing is retarded after the ignition timing is advanced to a set ignition advance limit, the control unit (20e) is configured to advance the ignition timing again and to decrease the exhaust recirculation amount.

2. The internal combustion engine control device (21) according to claim 1,
wherein, in a case where the combustion stability limit of the internal combustion engine (100) has not been reached in a state where the ignition timing is retarded after the ignition timing is advanced to a set ignition advance limit, the control unit (20e) controls to advance the ignition timing again and increase the exhaust recirculation amount.

3. The internal combustion engine control device (21) according to claim 1,
wherein, in a case where the combustion stability limit of the internal combustion engine (100) has not been reached in a state where the ignition timing is retarded after the ignition timing is advanced to the set knock limit, the control unit (20e) controls to advance the ignition timing again and increase the exhaust recirculation amount.

4. The internal combustion engine control device (21) according to any of claims 1 to 3,
wherein the control unit (20e) controls so as to maintain a constant value of the exhaust recirculation amount when advancing the ignition timing at the beginning.

## Patentansprüche

1. Brennkraftmaschinensteuervorrichtung (21), die eine Brennkraftmaschine (100), die mit einem Abgasrückführungsdurchlass ausgestattet ist, der ein Einlassen von Abgas der Brennkraftmaschine (100) in die Brennkraftmaschine (100) ermöglicht, steuert, wobei
die Brennkraftmaschinensteuervorrichtung (21) Folgendes umfasst:
eine Steuereinheit (20e), die konfiguriert ist, einen Zündzeitpunkt einer Zündkerze (16), die eine Zündung der Brennkraftmaschine (100) durchführt, erneut vorzurücken und eine Abgasrückführungsmenge zu erhöhen, falls eine Verbrennungsstabilitätsgrenze der Brennkraftmaschine (100) in einem Zustand, in dem der Zündzeitpunkt verzögert wird, nachdem der Zündzeitpunkt der Zündkerze (16) vorgerückt worden ist, nicht erreicht wurde, wobei der Zündzeitpunkt verzögert wird, nachdem der Zündzeitpunkt zu einer eingestellten Klopfgrenze vorgerückt worden ist, und die Steuereinheit (20e) konfiguriert ist, dann, wenn eine Verbrennungsinstabilität detektiert wird, ein Erhöhen der Abgasrückführungsmenge zu stoppen, wobei
dann, wenn die eingestellte Klopfgrenze detektiert wird, der Zündzeitpunkt für einen eingestellten Betrag verzögert wird, um die Verbrennungsinstabilität zu detektieren, und die Steuereinheit (20e) konfiguriert ist, dann, wenn die Verbrennungsstabilitätsgrenze der Brennkraftmaschine (100) in einem Zustand erreicht wurde, in dem der Zündzeitpunkt verzögert wird, nachdem der Zündzeitpunkt zu einer eingestellten Zündvoreilungsgrenze vorgerückt worden ist, den Zündzeitpunkt erneut vorzurücken und die Abgasrückführungsmenge zu verringern.

2. Brennkraftmaschinensteuervorrichtung (21) nach Anspruch 1, wobei
dann, wenn die Verbrennungsstabilitätsgrenze der Brennkraftmaschine (100) in einem Zustand, in dem der Zündzeitpunkt verzögert wird, nachdem der Zündzeitpunkt zu einer eingestellten Zündvoreilungsgrenze vorgerückt worden ist, nicht erreicht wurde, die Steuereinheit (20e) steuert, um den Zündzeitpunkt erneut vorzurücken und die Abgasrückführungsmenge zu erhöhen.

3. Brennkraftmaschinensteuervorrichtung (21) nach Anspruch 1, wobei
dann, wenn die Verbrennungsstabilitätsgrenze der Brennkraftmaschine (100) in einem Zustand, in dem der Zündzeitpunkt verzögert wird, nachdem der Zündzeitpunkt zur eingestellten Klopfgrenze vorgerückt worden ist, nicht erreicht wurde, die Steuereinheit (20e) steuert, um den Zündzeitpunkt erneut vorzurücken und die Abgasrückführungsmenge zu erhöhen.

4. Brennkraftmaschinensteuervorrichtung (21) nach einem der Ansprüche 1 bis 3, wobei
die Steuereinheit (20e) steuert, um einen konstanten Wert der Abgasrückführungsmenge aufrechtzuerhalten, wenn der Zündzeitpunkt zu Beginn vorgerückt wird.

## Revendications

1. Dispositif de commande de moteur à combustion interne (21) commandant un moteur à combustion interne (100) équipé d'un passage de recirculation d'échappement permettant une admission d'un gaz d'échappement du moteur à combustion interne (100) jusqu'au moteur à combustion interne (100),
le dispositif de commande de moteur à combustion interne (21) comprenant une unité de commande (20e) configurée pour avancer une temporisation d'allumage d'une bougie d'allumage (16) en effectuant à nouveau un allumage du moteur à combustion interne (100) et pour augmenter une quantité de recirculation d'échappement dans un cas où une limite de stabilité de combustion du moteur à combustion interne (100) n'a pas été atteinte dans un cas dans lequel la temporisation d'allumage est retardée après que la temporisation d'allumage de la bougie d'allumage (16) a été avancée, dans lequel la température d'allumage est retardée après que la temporisation d'allumage a été avancée à une limite de choc fixée, dans lequel, dans un cas où une instabilité de combustion est détectée, l'unité de commande (20e) est configurée pour arrêter d'augmenter la quantité de recirculation d'échappement, dans lequel,
dans un cas où la limite de choc fixée est détectée, la temporisation d'allumage est retardée pour une quantité fixée pour détecter l'instabilité de combustion, et dans un cas où la limite de stabilité de combustion du moteur à combustion interne (100) a été atteinte dans un cas dans lequel la temporisation d'allumage est retardée après que la temporisation d'allumage a été avancée à une limite d'avance d'allumage fixée, l'unité de commande (20e) est configurée pour avancer à nouveau la temporisation d'allumage et pour diminuer la quantité de recirculation d'échappement.

2. Dispositif de commande de moteur à combustion interne (21) selon la revendication 1,
dans lequel, dans un cas où la limite de stabilité de combustion du moteur à combustion interne (100) n'a pas été atteinte dans un état dans lequel la temporisation d'allumage est retardée après que la temporisation d'allumage a été avancée à une limite d'avance d'allumage fixée, l'unité de commande (20e) commande d'avancer à nouveau la temporisation d'allumage et d'augmenter la quantité de recirculation d'échappement.

3. Dispositif de commande de moteur à combustion interne (21) selon la revendication 1,
dans lequel, dans un cas où la limite de stabilité de combustion du moteur à combustion interne (100) n'a pas été atteinte dans un état dans lequel la temporisation d'allumage est retardée après que la temporisation d'allumage a été avancée à la limite de choc fixée, l'unité de commande (20e) commande d'avancer à nouveau la temporisation d'allumage et d'augmenter la quantité de recirculation d'échappement.

4. Dispositif de commande de moteur à combustion interne (21) selon l'une quelconque des revendications 1 à 3,
dans lequel l'unité de commande (20e) commande de façon à maintenir une valeur constante de la quantité de recirculation d'échappement lors de l'avancement de la temporisation d'allumage au début.
